# EUROPEAN PATENT APPLICATION

(11) **EP 3 961 476 A1**
(43) Date of publication of application: **02.03.2022**
(21) Application number: 21173906.5
(22) Date of filing: 14.05.2021
(51) Int. Cl.: G06F 40/295

(54) **ENTITY LINKING METHOD AND APPARATUS, ELECTRONIC DEVICE AND STORAGE MEDIUM**

(30) Priority: 28.08.2020 CN 202010886164
(71) Applicant: Beijing Baidu Netcom Science and Technology Co., Ltd., Beijing 100085 (CN)
(72) Inventor: ZHANG, Xiaobin, Beijing, 100085 (CN); FU, Zhihong, Beijing, 100085 (CN); HUANG, Dingbang, Beijing, 100085 (CN); LUO, Xiyi, Beijing, 100085 (CN); HE, Jingzhou, Beijing, 100085 (CN)
(74) Representative: dompatent von Kreisler Selting Werner - Partnerschaft von Patent- und Rechtsanwälten mbB

(57) **Abstract**

The present disclosure discloses an entity linking method and apparatus, an electronic device and a storage medium, and relates to the fields of artificial intelligence technologies and natural language processing technologies. A specific implementation solution is as follows: performing entity detection on a query text to acquire a target entity; generating a feature representation of the query text by using a pre-trained context representation model; and linking, based on the feature representation of the query text and pre-acquired feature representations of entity categories corresponding to the target entity, the target entity to an entity category with the highest matching degree. According to the present disclosure, related information can be effectively generalized based on a feature representation of a query text acquired by a context representation model and pre-acquired feature representations of entity categories, which ensures the accuracy of the feature representation of the query text and the feature representations of the entity categories and then can effectively improve the accuracy of entity linking.

## Description

### TECHNICAL FIELD

The present disclosure relates to the field of computer technologies, particularly to the fields of artificial intelligence technologies and natural language processing technologies, and more particularly to an entity linking method and apparatus, an electronic device and a storage medium.

### BACKGROUND

In Natural Language Processing (NLP), Named Entity Recognition (NER) belongs to a sub-task of information extraction. A piece of unstructured text is given, and NER is intended to determine positions and categories of entities therein.

Entity Linking (EL) is an important link in NER. EL refers to a task that links a target entity term in the text to a unique and concrete entity. To some extent, EL implements task of disambiguation mainly based on a context and degree of matching between different entities. For example, entity disambiguation cannot be implemented if only a word "apple" is given; however, if "eat an apple" or "apple phone (iPhone)" is given, it can be determined that the former refers to an entity corresponding to the fruit, while the latter refers to an entity corresponding to the brand. An existing entity linking technology is mainly to manually extract some co-occurrence features related to entities of entity categories in advance, then match the co-occurrence features of the entities of the entity categories according to a context of the entities in a text, and give scores. Finally, the entities of the category with the highest score are selected as a result of entity linking.

However, in existing entity linking methods, some co-occurrence features related to entities of various categories only extract literal feature information and cannot be effectively generalized, resulting in poor accuracy of entity linking.

### SUMMARY

In order to solve the above technical problem, the present disclosure provides an entity linking method and apparatus, an electronic device and a storage medium.

According to one aspect of the present disclosure, an entity linking method is provided, including following steps:
performing entity detection on a query text to acquire a target entity;
generating a feature representation of the query text by using a pre-trained context representation model; and
linking, based on the feature representation of the query text and pre-acquired feature representations of entity categories corresponding to the target entity, the target entity to an entity category with the highest matching degree.

According to another aspect of the present disclosure, an entity linking apparatus is provided, including:
a detection module configured for performing entity detection on a query text to acquire a target entity;
a first generation module configured for generating a feature representation of the query text by using a pre-trained context representation model; and
a linking module configured for linking, based on the feature representation of the query text and pre-acquired feature representations of entity categories corresponding to the target entity, the target entity to an entity category with the highest matching degree.

According to a further aspect of the present disclosure, an electronic device is provided, including:
at least one processor; and
a memory in communication connection with the at least one processor; and
the memory stores instructions executable by the at least one processor, and the instructions are executed by the at least one processor to enable the at least one processor to carry out the method as described above.

According to a further aspect of the present disclosure, there is provided a non-transitory computer-readable storage medium including instructions which, when executed by a computer, cause the computer to carry out the method as described above.

According to a still further aspect of the present disclosure, there is provided a computer program product including instructions which, when the program is executed by a computer, cause the computer to carry out the method as described above.

According to the technology in the present disclosure, related information can be effectively generalized based on a feature representation of a query text acquired by a context representation model and pre-acquired feature representations of entity categories, which ensures the accuracy of the feature representation of the query text and the feature representations of the entity categories and then can effectively improve the accuracy of entity linking.

It shall be understood that the content described in this part is neither intended to identify key or important features of embodiments of the present disclosure and nor intended to limit the scope of the present disclosure. Other effects of the above alternatives will be described below with reference to specific embodiments.

### BRIEF DESCRIPTION OF THE DRAWINGS

The accompanying drawings are intended to better understand the solution and do not constitute limitations on the present disclosure. In the drawings,
Fig. 1 is a schematic diagram according to a first embodiment of the present disclosure;
Fig. 2 is a schematic diagram according to a second embodiment of the present disclosure;
Fig. 3 is a nodal isomer diagram according to an example;
Fig. 4 is a schematic diagram according to a third embodiment of the present disclosure;
Fig. 5 is a schematic diagram according to a fourth embodiment of the present disclosure; and
Fig. 6 is a block diagram of an electronic device configured for implementing an entity linking method according to an embodiment of the present disclosure.

### DETAILED DESCRIPTION OF EMBODIMENTS

Exemplary embodiments of the present disclosure are described below with reference to the accompanying drawings, including various details of the embodiments of the present disclosure to facilitate understanding, and should be considered as exemplary only. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

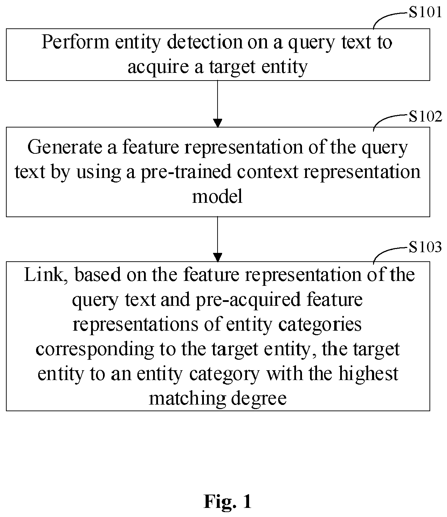

Fig. 1 is a schematic diagram according to a first embodiment of the present disclosure. As shown in Fig. 1, this embodiment provides an entity linking method, including the following steps:
S101: Entity detection is performed on a query text to acquire a target entity.
S102: A feature representation of the query text is generated by using a pre-trained context representation model.
S103: Based on the feature representation of the query text and pre-acquired feature representations of entity categories corresponding to the target entity, the target entity is linked to the entity category with the highest matching degree.

The entity linking method in this embodiment is performed by an entity linking apparatus. The apparatus is an electronic entity or a software-integrated application, and runs on a computer device in use, so as to link entities in the query text.

The query text in this embodiment may be a query inputted by a user. The query may include one, two or more target entities. With the manner in this embodiment, each target entity in the query text may be linked to a correct entity category.

Specifically, in this embodiment, firstly, entity detection is performed on the query text to detect all possible target entities in the query text. Moreover, in this embodiment, a feature representation of the query text may also be generated based on a pre-trained context representation model. For example, the feature representation of the query text may be expressed in the form of a vector.

Optionally, an entity dictionary may be collected in advance, and entity categories corresponding to entities are identified in the entity dictionary. For example, entities corresponding to apples that may be recorded in the entity library include fruit and electronics. In another example, a person A corresponds to different entity categories such as stars and entrepreneurs, and so on. A feature representation of each entity category of the same entity may be pre-acquired in this embodiment. Then, based on the feature representation of the query text and pre-acquired feature representations of entity categories corresponding to the target entity, an entity category with the highest matching degree is selected from the entity categories corresponding to the target entity, so as to link the target entity to the entity category with the highest matching degree and then implement disambiguation.

According to the entity linking method in this embodiment, a target entity is acquired by performing entity detection on a query text; a feature representation of the query text is generated by using a pre-trained context representation model; and based on the feature representation of the query text and pre-acquired feature representations of entity categories corresponding to the target entity, the target entity is linked to an entity category with the highest matching degree. Compared with the prior art, in this embodiment, related information can be effectively generalized based on a feature representation of a query text acquired by a context representation model and pre-acquired feature representations of entity categories, which ensures the accuracy of the feature representation of the query text and the feature representations of the entity categories and then can effectively improve the accuracy of entity linking.

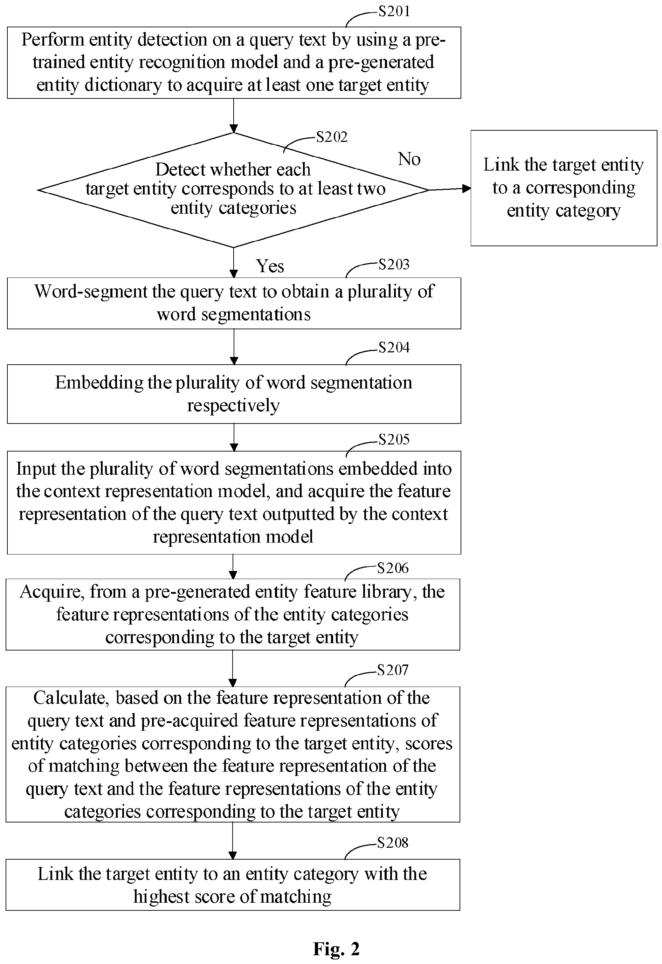

Fig. 2 is a schematic diagram according to a second embodiment of the present disclosure. As shown in Fig. 2, on the basis of the technical solution of the embodiment shown in Fig. 1, the technical solution of the present disclosure is further introduced in more detail with reference to an entity linking method in this embodiment. As shown in Fig. 2, the entity linking method in this embodiment may specifically include following steps:
S201: Entity detection is performed on a query text by using a pre-trained entity recognition model and a pre-generated entity dictionary to acquire at least one target entity.

In this embodiment, entities in a query text are detected by using both an entity recognition model and a pre-generated entity dictionary. In an actual application, the entities in the query text may also be detected in an alternative manner.

The entity recognition model in this embodiment can detect all target entities in the query text. During training of the entity recognition model, a plurality of training texts may be pre-collected, and target entities in each training text are labeled. Each training text is inputted into the entity recognition model, and the entity recognition model predicts a target entity in the training text. If the predicted one is inconsistent with the labeled one, parameters of the entity recognition model are adjusted. Then the next training text is used to continue the training as described above until the predicted and labeled results are consistent throughout successive rounds of training. In this case, parameters of the entity recognition model can be determined, then the entity recognition model can be determined, and the training ends.

In this embodiment, the number of training texts collected during training may be up to millions of orders of magnitude. A greater number of training texts indicates that the trained entity recognition model is more accurate.

When entity detection is performed on a query text by using an entity recognition model, the query text may be inputted into the entity recognition model. The entity recognition model may predict and output all possible target entities in the query text. It is to be noted that the entity recognition model in this embodiment may be implemented by using a sequence labeling model such as Bi-LSTM-CRF.

In addition, an entity dictionary further needs to be pre-generated in this embodiment. Specifically, entities and all entity categories corresponding to each entity may be collected in various manners and recorded in an entity dictionary. During specific detection, the query text may be word-segmented at first (to obtain a plurality of semantic elements, for example), whether each word segmentation (such as semantic element) exists in the entity dictionary is then detected by using the entity dictionary, and if yes, the word segmentation is determined as a target entity. Each possible target entity in the query text may also be detected in this manner.

Since in an actual application, entity detection on the query text by using the entity recognition model is different from that by using the entity dictionary, detection results may be different. In this embodiment, in order to acquire target entities in the query text as comprehensive as possible, an example in which target entities detected in the two manners are obtained is given. In an actual application, entity detection only in one manner may be performed in an alternative manner to obtain a corresponding target entity.

S202: It is detected whether each target entity corresponds to at least two entity categories; if not, the target entity is linked to a corresponding entity category; otherwise, step S203 is performed.

The entities recorded in the entity dictionary in this embodiment may be names of people, places, objects, and the like. Moreover, some entities in the entity dictionary may have only one entity category, while some entities may have two or more entity categories. For the entities with only one entity category, there is no corresponding disambiguation task. In this case, corresponding target entities are linked to corresponding entity categories, respectively. For the target entities with at least two entity categories, entity linking is required to link the target entities to correct entity categories.

S203: The query text is word-segmented to obtain a plurality of word segmentations (or semantic elements or tokens).

Optionally, the granularity of word segmentation in this embodiment may be the granularity of word or phrases.

S204: The plurality of word segmentations are embedded respectively.

S205: The plurality of word segmentations embedded are inputted into the context representation model, and the feature representation of the query text outputted by the context representation model is acquired.

The feature representation in this embodiment may be expressed in the form of a vector.

The context representation model in this embodiment is also pre-trained. It is to be noted that during draining of the context representation model in this embodiment, the training needs to be performed with reference to the target entity in the query text and corresponding entity categories.

For example, a plurality of training texts may be pre-collected. A target entity in the training texts and an entity category identified by the target entity in the training texts are labeled, and a feature representation of the target entity on the entity category is further acquired. During training, each training text, after word segmentation and embedding, is inputted into the context representation model in the above manner, and the context representation model predicts and outputs the feature representation of the training text. Then, parameters of the context representation model are adjusted based on the feature representation of the training text and a feature representation of the target entity in the training text on the corresponding entity category. For example, since the target entity in the training text belongs to a part of the training text, the feature representation of the target entity in the training text on the corresponding entity category should be similar to the feature representation of the training text in theory. For example, the similarity of two vectors may be greater than a particular similarity threshold. During training, if it is less than the similarity threshold, the parameters of the context representation model need to be adjusted, so that the similarity between the feature representation of the training text and the feature representation of the target entity in the training text on the corresponding entity category is large enough to be greater than the similarity threshold. The context representation model is constantly trained in the above manner by using the plurality of training texts and the acquired feature representation of the target entity in the training text on the corresponding entity category, till the similarity between the feature representation of the training text and the feature representation of the target entity in the training text on the corresponding entity category is always large enough to be greater than the similarity threshold in successive preset rounds of training. In this case, the training ends, parameters of the context representation model can be determined, and then the context representation model is determined.

Similarly, the number of training texts collected during training may be up to millions of orders of magnitude. A greater number of training texts indicates that the trained context representation model is more accurate.

Steps S203 to S205 are an implementation of step S102 in the embodiment shown in Fig. 1.

S206: the feature representations of the entity categories corresponding to the target entity are acquired from a pre-generated entity feature library.

It is to be noted that in this embodiment, before step S206, following steps may be further included:
(a1): generating, based on an entity representation model and the entity categories of the target entity, the feature representations of the entity categories corresponding to the target entity; and
(b1) storing the feature representations of the entity categories corresponding to the target entity in the entity feature library.

During specific implementation of step (a1), following steps may be further included:
(a2) collecting a plurality of training sample pairs corresponding to the entity categories of the target entity, each of the training sample pairs including a positive sample and a negative sample, the positive sample including an entity and a positive sample entity belonging to the same entity category as the entity, and the negative sample including the entity and a negative sample entity not belonging to the same entity category as the entity in the positive sample; and
(b2) training the entity representation model by using the plurality of training sample pairs, so that the entity representation model generates a feature representation of an entity category identified by the positive sample to match a feature representation of the positive sample entity, but not to match a feature representation of the negative sample entity, and then obtain the feature representations of the entity categories corresponding to the target entity.

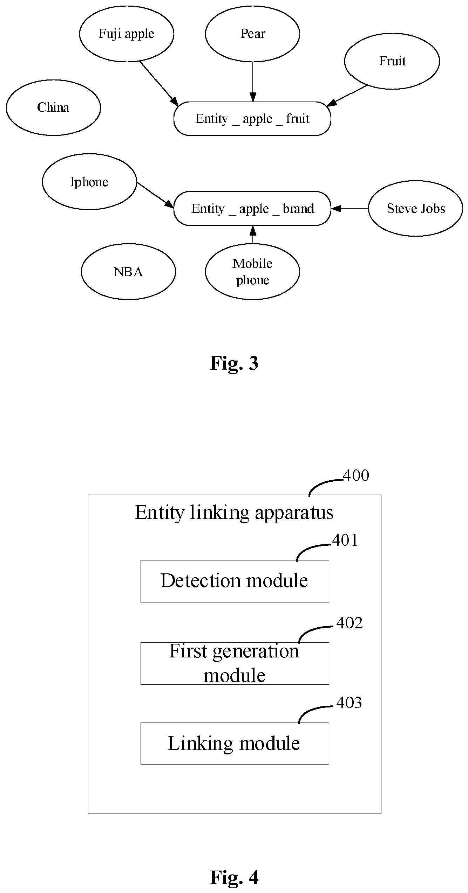

For example, Fig. 3 is a nodal isomer diagram according to an example. As shown in Fig. 3, the isomer diagram includes nodes of two entity categories of the same entity, such as entity_apple_fruit and entity_apple_brand. Nodes pointing to entity_apple_fruit correspond to contextual words associated with the entity category, which may include Fuji apple, pear, and fruit. Nodes pointing to entity_ apple_brand correspond to contextual words associated with the entity category, which may include iphone, mobile phone, and Steve Jobs. That is, a node corresponding to a contextual word associated with an entity and a node corresponding to the entity may have a corresponding edge connection. The entity representation model is intended to learn a feature representation, namely semantic vector representation, of an entity, and embed contextual semantics associated with the entity into the vector representation of the entity. A natural idea is to apply word2vec's BOW model directly, that is, common words in each context are used to predict entity vectors. However, such a model structure is too simple. A Graph Convolutional Network (GCN) is very suitable for this task, and parameter sharing of convolutional kernels can be used to learn entity vector representation with richer semantics. Therefore, in this embodiment, the entity representation model may be implemented specifically by using a GCN.

During specific training, for each target entity, a plurality of training sample pairs corresponding to the entity categories of the target entity may be collected, and each of the training sample pairs includes a positive sample and a negative sample. For example, the positive sample includes an entity and a positive sample entity belonging to the same entity category as the entity, and the negative sample includes the entity and a negative sample entity not belonging to the same entity category as the entity in the positive sample. For example, when a feature representation of entity _ apple _ fruit is generated, a collected positive sample may include apples and fruit, or apples and bananas, or may include positive sample entities such as apples, pears and other fruit. A corresponding negative sample may include apples and mobile phones, or apples and clothes, or any other negative sample entities other than apples and fruit. Then, the entity in the positive sample, the positive sample entity and the negative sample entity are respectively inputted to the entity representation model. The entity representation model may predict and output feature representations of the entity, the positive sample entity, and the negative sample entity respectively. Since the entity and the positive sample entity belong to the same entity category and the entity and the negative sample entity belong to different entity categories, the training in this embodiment is intended to make a feature representation of an entity category identified by a positive sample generated by the entity representation model match a feature representation of the positive sample entity, but not match a feature representation of the negative sample entity. The "match" in this embodiment may be that the similarity is greater than a first preset similarity threshold, such as 80%, 85%, or other percentages greater than 50%. The "not match" may be that the similarity is less than a second similarity threshold, such as 50%, 45%, or other percentages less than 50%. If the feature representations of the entity, the positive sample entity, and the negative sample entity outputted by the entity representation model do not satisfy the above conditions, parameters of the entity representation model may be adjusted to make the feature representations satisfy the above conditions. The entity representation model is constantly trained in the above manner by using a plurality of training sample pairs corresponding to the entity category, till the above conditions are always satisfied in successive preset rounds of training. In this case, a feature representation of the entity category generated by the entity representation model may be obtained. Feature representations of the entity categories of the target entities may be obtained in this manner. The feature representations of the entity categories of the target entities are then stored in the entity feature library. The feature representations of the entity categories of the target entities generated in this manner have strong generalization capability and can accurately represent information of the entity categories.

In use, it is only necessary to acquire, based on the entity and an entity category, a feature representation of the corresponding entity category. It is very convenient to use.

S207: Based on the feature representation of the query text and pre-acquired feature representations of entity categories corresponding to the target entity, scores of matching between the feature representation of the query text and the feature representations of the entity categories corresponding to the target entity are calculated.

S208: The target entity is linked to an entity category with the highest score of matching.

Specifically, similarity calculation may be performed respectively between the feature representation of the query text and the feature representations of the entity categories of the target entity, and obtained similarity values are used as the scores of matching between the feature representation of the query text and the feature representations of the entity categories corresponding to the target entity. A higher similarity value indicates a higher score of matching, which means that the matching between the query text and the entity category of the target entity is higher, and vice versa. Based on this, the entity category with the highest score of matching can be obtained from at least two entity categories of the target entity as a final result of disambiguation and linking. Finally, the target entity is linked to the acquired entity category with the highest score of matching.

Steps S207 to S208 are an implementation of step S103 in the embodiment shown in Fig. 1.

The entity linking method in this embodiment can achieve a better generalization effect by representing related information with feature representations. During entity linking, the feature representation of the target entity may match a context, which abandons the practice of using co-occurrence features in the prior art, and can bring a more accurate matching effect and effectively improve the accuracy of entity linking. Moreover, compared with the prior art, in this embodiment, since a large number of feature extraction processes are replaced with a neural network model, the overall process has advantages in performance and significant optimization in resource consumption. Besides, the whole process is no longer dependent on feature engineering of manual intervention and rules, avoiding the maintenance of a large number of rules and feature engineering of manual design, which can effectively improve the intelligence and practicability of entity linking technologies.

Fig. 4 is a schematic diagram according to a third embodiment of the present disclosure. As shown in Fig. 4, this embodiment provides an entity linking apparatus 400, including:
a detection module 401 configured for performing entity detection on a query text to acquire a target entity;
a first generation module 402 configured for generating a feature representation of the query text by using a pre-trained context representation model; and
a linking module 403 configured for linking, based on the feature representation of the query text and pre-acquired feature representations of entity categories corresponding to the target entity, the target entity to an entity category with the highest matching degree.

The entity linking apparatus 400 in this embodiment implements an implementation principle and a technical effect of entity linking by using the above modules, which is the same as the implementation in the above related method embodiment. Details can be obtained with reference to the description in the above related method embodiment, and are not repeated herein.

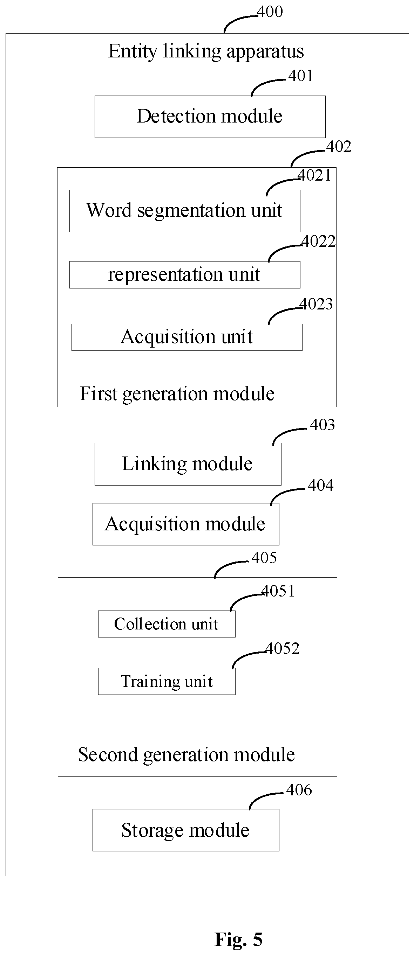

Fig. 5 is a schematic diagram according to a fourth embodiment of the present disclosure. As shown in Fig. 5, on the basis of the technical solution of the embodiment shown in Fig. 4, the technical solution of the present disclosure is further introduced in more detail with reference to the entity linking apparatus 400 in this embodiment.

As shown in Fig. 5, the entity linking apparatus 400 in this embodiment further includes:
an acquisition module 404 configured for acquiring, from a pre-generated entity feature library, the feature representations of the entity categories corresponding to the target entity.

Further optionally, as shown in Fig. 5, the entity linking apparatus 400 in this embodiment further includes:
a second generation module 405 configured for generating, based on an entity representation model and the entity categories of the target entity, the feature representations of the entity categories corresponding to the target entity; and
a storage module 406 configured for storing the feature representations of the entity categories corresponding to the target entity in the entity feature library.

Further optionally, as shown in Fig. 5, the second generation module 405 includes:
a collection unit 4051 configured for collecting a plurality of training sample pairs corresponding to the entity categories of the target entity, each of the training sample pairs including a positive sample and a negative sample, the positive sample including an entity and a positive sample entity belonging to the same entity category as the entity, and the negative sample including the entity and a negative sample entity not belonging to the same entity category as the entity in the positive sample; and
a training unit 4052 configured for training the entity representation model by using the plurality of training sample pairs, so that the entity representation model generates a feature representation of an entity category identified by the positive sample to match a feature representation of the positive sample entity, but not to match a feature representation of the negative sample entity, and then obtaining the feature representations of the entity categories corresponding to the target entity.

Further optionally, as shown in Fig. 5, the first generation module 402 includes:
a word segmentation unit 4021 configured for word-segmenting the query text to obtain a plurality of word segmentations;
a representation unit 4022 configured for embedding the plurality of word segmentations respectively; and
an acquisition unit 4023 configured for inputting the plurality of word segmentations embedded into the context representation model, and acquiring the feature representation of the query text outputted by the context representation model.

Further optionally, the detection module 401 is further configured for detecting and determining that the target entity corresponds to at least two entity categories.

Further optionally, the detection module 401 is configured for:
performing entity detection on the query text by using an entity recognition model to acquire the target entity; and/or
performing entity detection on the query text by using a pre-generated entity dictionary to acquire the target entity.

The entity linking apparatus 400 in this embodiment implements an implementation principle and a technical effect of entity linking by using the above modules, which is the same as the implementation in the above related method embodiment. Details can be obtained with reference to the description in the above related method embodiment, and are not repeated herein.

According to embodiments of the present disclosure, the present disclosure further provides an electronic device, a readable storage medium and a computer program product.

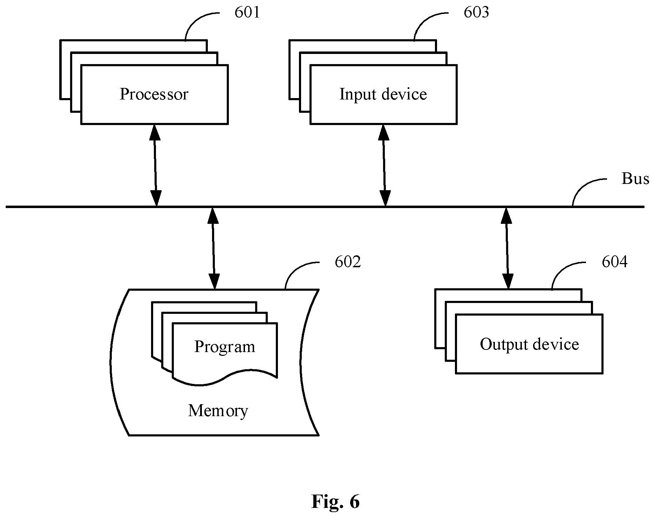

As shown in Fig. 6, it is a block diagram of an electronic device configured to implement an entity linking method according to an embodiment of the present disclosure. The electronic device is intended to represent various forms of digital computers, such as laptops, desktops, workbenches, personal digital assistants, servers, blade servers, mainframe computers and other suitable computers. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in Fig. 6, the electronic device includes: one or more processors 601, a memory 602, and interfaces for connecting various components, including high-speed interfaces and low-speed interfaces. The components are connected to each other by using different buses and may be installed on a common motherboard or otherwise as required. The processor may process instructions executed in the electronic device, including instructions stored in the memory or on the memory to display graphical information of a graphical user interface (GUI) on an external input/output device (such as a display device coupled to the interfaces). In other implementations, a plurality of processors and/or buses may be used together with a plurality of memories, if necessary. Similarly, a plurality of electronic devices may be connected, each of which provides some necessary operations (for example, as a server array, a set of blade servers, or a multiprocessor system). One processor 601 is taken as an example is Fig. 6.

The memory 602 is the non-instantaneous computer-readable storage medium according to the present disclosure. The memory stores instructions executable by at least one processor to make the at least one processor perform the entity linking method according to the present disclosure. The non-instantaneous computer-readable storage medium according to the present disclosure stores computer instructions. The computer instructions are used to make a computer perform the entity linking method according to the present disclosure.

The memory 602, as a non-instantaneous computer-readable storage medium, may be configured to store non-instantaneous software programs, non-instantaneous computer executable programs and modules, for example, program instructions/modules corresponding to the entity linking method in the embodiment of the present disclosure (e.g., the related modules shown in Fig. 4 and Fig. 5). The processor 601 runs the non-instantaneous software programs, instructions and modules stored in the memory 602 to execute various functional applications and data processing of a server, that is, to implement the entity linking method in the above method embodiment.

The memory 602 may include a program storage area and a data storage area. The program storage area may store an operating system and an application required by at least one function; and the data storage area may store data created according to use of the electronic device that implements the entity linking method. In addition, the memory 602 may include a high-speed random access memory, and may further include a non-instantaneous memory, for example, at least one disk storage device, a flash memory device, or other non-instantaneous solid-state storage devices. In some embodiments, the memory 602 optionally includes memories remotely disposed relative to the processor 601. The remote memories may be connected, over a network, to the electronic device that implements the entity linking method. Examples of the network include, but are not limited to, the Internet, intranets, local area networks, mobile communication networks and combinations thereof.

The electronic device that implements the entity linking method may further include: an input device 603 and an output device 604. The processor 601, the memory 602, the input device 603 and the output device 604 may be connected through a bus or in other manners. In Fig. 6, the connection through a bus is taken as an example.

The input device 603 may receive input numerical information or character information, and generate key signal input related to user setting and function control of the electronic device that implements XXX method, for example, input devices such as a touch screen, a keypad, a mouse, a trackpad, a touch pad, a pointer, one or more mouse buttons, a trackball, and a joystick. The output device 604 may include a display device, an auxiliary lighting device (e.g., an LED) and a tactile feedback device (e.g., a vibration motor). The display device may include, but is not limited to, a liquid crystal display (LCD), a light-emitting diode (LED) display, and a plasma display. In some implementations, the display device may be a touch screen.

Various implementations of the systems and technologies described herein may be implemented in a digital electronic circuit system, an integrated circuit system, an application-specific integrated circuit (ASIC), computer hardware, firmware, software, and/or combinations thereof. The various implementations may include: being implemented in one or more computer programs. The one or more computer programs may be executed and/or interpreted on a programmable system including at least one programmable processor. The programmable processor may be a special-purpose or general-purpose programmable processor, receive data and instructions from a storage system, at least one input device and at least one output device, and transmit the data and the instructions to the storage system, the at least one input device and the at least one output device.

The computing programs (also referred to as programs, software, software applications, or code) include machine instructions for programmable processors, and may be implemented by using high-level procedural and/or object-oriented programming languages, and/or assembly/machine languages. As used herein, the terms "machine-readable medium" and "computer-readable medium" refer to any computer program product, device, and/or apparatus (e.g., a magnetic disk, an optical disc, a memory, and a programmable logic device (PLD)) configured to provide machine instructions and/or data to a programmable processor, including a machine-readable medium that receives machine instructions serving as machine-readable signals. The term "machine-readable signal" refers to any signal for providing the machine instructions and/or data to the programmable processor.

To provide interaction with a user, the systems and technologies described here can be implemented on a computer. The computer has: a display device (e.g., a cathode-ray tube (CRT) or an LCD monitor) for displaying information to the user; and a keyboard and a pointing device (e.g., a mouse or trackball) through which the user may provide input for the computer. Other kinds of device may also be configured to provide interaction with the user. For example, a feedback provided for the user may be any form of sensory feedback (e.g., visual, auditory, or tactile feedback); and input from the user may be received in any form (including sound input, voice input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN), and the Internet.

The computer system may include a client and a server. The client and the server are generally far away from each other and generally interact via the communication network. A relationship between the client and the server is generated through computer programs that run on a corresponding computer and have a client-server relationship with each other.

According to the technical solutions in the embodiments of the present disclosure, a target entity is acquired by performing entity detection on a query text; a feature representation of the query text is generated by using a pre-trained context representation model; and based on the feature representation of the query text and pre-acquired feature representations of entity categories corresponding to the target entity, the target entity is linked to an entity category with the highest matching degree. Compared with the prior art, in this embodiment, related information can be effectively generalized based on a feature representation of a query text acquired by a context representation model and pre-acquired feature representations of entity categories, which ensures the accuracy of the feature representation of the query text and the feature representations of the entity categories and then can effectively improve the accuracy of entity linking.

The technical solutions according to the embodiments of the present disclosure can achieve a better generalization effect by representing related information with feature representations. During entity linking, the feature representation of the target entity may match a context, which abandons the practice of using co-occurrence features in the prior art, and can bring a more accurate matching effect and effectively improve the accuracy of entity linking. Moreover, compared with the prior art, in this embodiment, since a large number of feature extraction processes are replaced with a neural network model, the overall process has advantages in performance and significant optimization in resource consumption. Besides, the whole process is no longer dependent on feature engineering of manual intervention and rules, avoiding the maintenance of a large number of rules and feature engineering of manual design, which can effectively improve the intelligence and practicability of entity linking technologies.

It shall be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the extent of protection of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the extent of protection of the present disclosure.

## Claims

1. An entity linking method, comprising:
performing (S101) entity detection on a query text to acquire a target entity;
generating (S102) a feature representation of the query text by using a pre-trained context representation model; and
linking (S103), based on the feature representation of the query text and pre-acquired feature representations of entity categories corresponding to the target entity, the target entity to an entity category with the highest matching degree.

2. The method according to claim 1, wherein after the generating (S102) the feature representation of the query text by using the pre-trained context representation model and before the linking (S103), based on the feature representation of the query text and pre-acquired feature representations of entity categories corresponding to the target entity, the target entity to an entity category with the highest matching degree, the method further comprises:
acquiring, from a pre-generated entity feature library, the feature representations of the entity categories corresponding to the target entity.

3. The method according to claim 2, wherein before the acquiring, from the pre-generated entity feature library, the feature representations of the entity categories corresponding to the target entity, the method further comprises:
generating, based on an entity representation model and the entity categories of the target entity, the feature representations of the entity categories corresponding to the target entity; and
storing the feature representations of the entity categories corresponding to the target entity in the entity feature library.

4. The method according to claim 3, wherein the generating, based on the entity representation model and the entity categories of the target entity, the feature representations of the entity categories corresponding to the target entity comprises:
collecting a plurality of training sample pairs corresponding to the entity categories of the target entity, each of the training sample pairs comprising a positive sample and a negative sample, the positive sample comprising an entity and a positive sample entity belonging to the same entity category as the entity, and the negative sample comprising the entity and a negative sample entity not belonging to the same entity category as the entity in the positive sample; and
training the entity representation model by using the plurality of training sample pairs, so that the entity representation model generates a feature representation of an entity category identified by the positive sample to match a feature representation of the positive sample entity, but not to match a feature representation of the negative sample entity, and then obtain the feature representations of the entity categories corresponding to the target entity.

5. The method according to any one of claims 1 to 4, wherein the generating (S102) the feature representation of the query text by using the pre-trained context representation model comprises:
word-segmenting (S203) the query text to obtain a plurality of word segmentations;
embedding (S204) the plurality of word segmentations respectively; and
inputting (S205) the plurality of word segmentations embedded into the context representation model, and acquiring the feature representation of the query text outputted by the context representation model.

6. The method according to any one of claims 1 to 5, wherein after the performing (S101) entity detection on to query text to acquire the target entity and before the linking (S103), based on the feature representation of the query text and pre-acquired feature representations of entity categories corresponding to the target entity, the target entity to the entity category with the highest matching degree, the method further comprises:
detecting and determining that the target entity corresponds to at least two entity categories.

7. The method according to any one of claims 1 to 6, wherein the performing (S101) entity detection on the query text to acquire the target entity comprises:
performing entity detection on the query text by using an entity recognition model to acquire the target entity; and/or
performing entity detection on the query text by using a pre-generated entity dictionary to acquire the target entity.

8. An entity linking apparatus (400), comprising:
a detection module (401) configured for performing (S101) entity detection on a query text to acquire a target entity;
a first generation module (402) configured for generating (S102) a feature representation of the query text by using a pre-trained context representation model; and
a linking module (403) configured for linking (S103), based on the feature representation of the query text and pre-acquired feature representations of entity categories corresponding to the target entity, the target entity to an entity category with the highest matching degree.

9. The apparatus (400) according to claim 8, further comprising:
an acquisition module (404) configured for acquiring, from a pre-generated entity feature library, the feature representations of the entity categories corresponding to the target entity.

10. The apparatus (400) according to claim 9, further comprising:
a second generation module (405) configured for generating, based on an entity representation model and the entity categories of the target entity, the feature representations of the entity categories corresponding to the target entity; and
a storage module (406) configured for storing the feature representations of the entity categories corresponding to the target entity in the entity feature library.

11. The apparatus (400) according to claim 10, wherein the second generation module comprises:
a collection unit (4051) configured for collecting a plurality of training sample pairs corresponding to the entity categories of the target entity, each of the training sample pairs comprising a positive sample and a negative sample, the positive sample comprising an entity and a positive sample entity belonging to the same entity category as the entity, and the negative sample comprising the entity and a negative sample entity not belonging to the same entity category as the entity in the positive sample; and
a training unit (4052) configured for training the entity representation model by using the plurality of training sample pairs, so that the entity representation model generates a feature representation of an entity category identified by the positive sample to match a feature representation of the positive sample entity, but not to match a feature representation of the negative sample entity, and then obtain the feature representations of the entity categories corresponding to the target entity.

12. The apparatus (400) according to any one of claims 8 to 11, wherein the first generation module (402) comprises:
a word segmentation unit (4021) configured for word-segmenting (S203) the query text to obtain a plurality of word segmentations;
a representation unit (4022) configured for embedding (S204) the plurality of word segmentations respectively; and
an acquisition unit (4023) configured for inputting (S205) the plurality of word segmentations embedded into the context representation model, and acquire the feature representation of the query text outputted by the context representation model.

13. An electronic device, comprising:
at least one processor; and
a memory (602) in communication connection with the at least one processor (601); wherein
the memory (602) stores instructions executable by the at least one processor (601), and the instructions are executed by the at least one processor (601) to enable the at least one processor (601) to carry out the method according to any one of claims 1 to 7.

14. A non-transitory computer-readable storage medium comprising instructions which, when executed by a computer, cause the computer to carry out the method according to any one of claims 1 to 7.

15. A computer program product comprising instructions which, when the program is executed by a computer, cause the computer to carry out the method according to any one of claims 1 to 7.
